Europäisches Patentamt

(19) European Patent Office

Office européen des brevets

(11) EP 0 987 684 B1

(12) EUROPÄISCHE PATENTSCHRIFT

(45) Veröffentlichungstag und Bekanntmachung des Hinweises auf die Patenterteilung:
14.12.2005 Patentblatt 2005/50

(51) Int Cl.$^7$: **G10L 15/18**

(21) Anmeldenummer: **99202894.4**

(22) Anmeldetag: **08.09.1999**

(54) **Verfahren zur Schätzung von Auftrittswahrscheinlichkeiten für Sprachvokabularelemente**

Method for estimating occurence probabilities of vocabulary elements

Procédé d'estimation des probabilités d'apparition des éléments de vocabulaire

(84) Benannte Vertragsstaaten:
DE FR GB

(30) Priorität: **16.09.1998 DE 19842404**

(43) Veröffentlichungstag der Anmeldung:
**22.03.2000 Patentblatt 2000/12**

(73) Patentinhaber:
• **Philips Intellectual Property & Standards GmbH**
**20099 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder: **Klakow, Dietrich**
**52064 Aachen (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
• **NAM SOO KIM ET AL: "FRAME-CORRELATED HIDDEN MARKOV MODEL BASED ON EXTENDED LOGARITHMIC POOL" IEEE TRANSACTIONS ON SPEECH AND AUDIO PROCESSING, IEEE INC. NEW YORK, US, Bd. 5, Nr. 2, 1. März 1997 (1997-03-01), Seiten 149-160, XP000771953 ISSN: 1063-6676**
• **KNESER R ET AL: "On the dynamic adaptation of stochastic language models" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, Bd. 4, 27. April 1993 (1993-04-27), Seiten 586-589, XP010110524 ISBN: 0-7803-0946-4**
• **KNESER R ET AL: "LANGUAGE MODEL ADAPTATION USING DYNAMIC MARGINALS" 5TH EUROPEAN CONFERENCE ON SPEECH COMMUNICATION AND TECHNOLOGY. EUROSPEECH '97. RHODES, GREECE, SEPT. 22 - 25, 1997, EUROPEAN CONFERENCE ON SPEECH COMMUNICATION AND TECHNOLOGY. (EUROSPEECH), GRENOBLE: ESCA, FR, Bd. 4 OF 5, 22. September 1997 (1997-09-22), Seiten 1971-1974, XP001049248**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Schätzung von Auftrittswahrscheinlichkeiten für Elemente eines Sprachvokabulars eines Spracherkennungssystems.

In auf statistischen Modellen beruhenden Spracherkennungssystemen wird sowohl eine akustische als auch eine linguistische Sprachmodellierung eingesetzt. Die Erfindung liegt auf dem Gebiet der linguistischen Sprachmodellierung.

Es ist bekannt, Auftrittswahrscheinlichkeiten für Elemente eines Sprachvokabulars durch lineare Kombination von verschiedenen M-Gramm-Wahrscheinlichkeiten dieses Elements zu bestimmen. Aus R. Kneser, V. Steinbiss, "On the dynamic adaptation of stochastic language models", Proc. ICASSP, Seiten 586-589, 1993 ist es bekannt, zur Bildung der Auftrittswahrscheinlichkeiten von Bigramm-Vokabularelementen mehrere für verschiedene Trainingsvokabularkorpora ermittelte Auftrittswahrscheinlichkeiten dieser Bigramm-Vokabularelemente linear zu kombinieren.

Aus R. Kneser, J. Peters, and D. Klakow, "Language Model Adaptation using Dynamic Marginals", EUROSPEECH, Seiten 1971-1974, 1997 ist außerdem bekannt (siehe Formeln (8) und (9)), bei der Schätzung der Auftrittswahrscheinlichkeit eines Sprachvokabularelements eine mittels eines ersten Trainingsvokabularkorpus geschätzte M-Gramm-Wahrscheinlichkeit mit $M > 1$ für das Sprachvokabularelement mit einem mit einem optimierten Parameterwert potenzierten Quotienten zu multiplizieren, wobei der optimierte Parameterwert mittels des GIS-Algorithmus ("Generalized Iterative Scaling") bestimmt ist und wobei als Dividend des Quotienten eine mittels eines zweiten Trainingsvokabularkorpus geschätzte Unigrammwahrscheinlichkeit des Elements und als Divisor des Quotienten eine mittels des ersten Trainingsvokabularkorpus geschätzte Unigrammwahrscheinlichkeit des Elements dient. Mit diesem Ansatz kann die Fehlerrate und die Perplexität eines Spracherkennungssystems reduziert werden.

Der Erfindung liegt die Aufgabe zugrunde, durch Modifikation der linguistischen Sprachmodellierung weiter Alternativen anzugeben, mittels derer die Fehlerrate und Perplexität eines Spracherkennungssystems reduzierbar sind.

Die Aufgabe wird dadurch gelöst, daß bei der Schätzung einer Auftrittswahrscheinlichkeit eines Elements des Sprachvokabulars verschiedene M-Gramm-Wahrscheinlichkeiten dieses Elements jeweils mit einem M-Gramm-spezifischen optimierten Parameterwert potenziert und die so erhaltenen Potenzwerte miteinander multipliziert werden.

Als M-Gramme kommen beispielsweise Unigramme, Bigramme, Lückenbigramme oder Trigramme in Betracht, die das jeweilige Sprachvokabularelement enthalten. Die erfindungsgemäße Lösung beruht auf dem Ansatz, die Kullback-Leibler-Distanz bezüglich der verschiedenen M-Gramm-Wahrscheinlichkeiten und der resultierenden Auftrittswahrscheinlichkeit durch die beschriebene Kombination von M-Gramm-Wahrscheinlichkeiten zu minimieren. Die Erfindung ermöglicht eine effektive Kombination von bekannten linguistischen Sprachmodellen, die durch die (Auftritts-) Wahrscheinlichkeit der entsprechenden Vokabularelemente bestimmt sind. Dies führt zu für den ausgewählten Anwendungsfall besser angepaßten Wahrscheinlichkeiten der Vokabularelemente des Sprachvokabulars und zu einem verbesserten linguistischen Sprachmodell für das Spracherkennungssystem.

Folgender Fall soll vom Schutzbereich nicht erfaßt sein ("disclaimer"): Bei Schätzung der Auftrittswahrscheinlichkeit eines Sprachvokabularelements wird eine mittels eines ersten Trainingsvokabularkorpus geschätzte M-Gramm-Wahrscheinlichkeit mit $M > 1$ für das Sprachvokabularelement mit einem mit einem optimierten Parameterwert potenzierten Quotienten multipliziert, wobei der optimierte Parameterwert mittels des GIS-Algorithmus bestimmt ist und wobei als Dividend des Quotienten eine mittels eines zweiten Trainingsvokabularkorpus geschätzte Unigrammwahrscheinlichkeit des Elements und als Divisor des Quotienten eine mittels des ersten Trainingsvokabularkorpus geschätzte Unigramm Wahrscheinlichkeit des Elements dient.

Dieser nicht vom Schutzbereich erfaßte Fall ist bereits aus dem Artikel von R. Kneser, J. Peters, and D. Klakow, "Language Model Adaptation using Dynamic Marginals", EUROSPEECH, Seiten 1971-1974, 1997 bekannt, wobei bei die Herleitung dieses Ansatzes auf der Verwendung des bekannten GIS-Algorithmus beruht und nur zu diesem einen speziellen Lösungsansatz führt, nicht aber zu den anderen vom Schutzbereich erfaßten Fällen.

In einer Ausgestaltung der Erfindung ist vorgesehen, daß zur Schätzung eines ersten Teils der M-Gramm-Wahrscheinlichkeiten ein erster Trainingsvokabularkorpus und zur Schätzung eines zweiten Teils der M-Gramm-Wahrscheinlichkeiten ein erster Teil eines zweiten Trainingsvokabularkorpus verwendet wird und daß zur Bestimmung der den M-Gramm-Wahrscheinlichkeiten zugeordneten optimierten Parameterwerte ein zweiter Teil des zweiten Trainingsvokabularkorpus verwendet wird. Auf diese Weise lassen sich in die Modellbildung Vokabulare unterschiedlichen Umfangs integrieren, die mit unterschiedlichem Grad auf spezielle Anwendungen angepaßt sind. So ist vorzugsweise der erste Trainingsvokabularkorpus ein anwendungsunspezifischer Vokabularkorpus wie beispielsweise der NAB-Korpus (North American Business News). Der zweite Vokabularkorpus besteht vorzugsweise aus Vokabularelementen aus einem oder mehreren Beispieltexten aus bestimmten speziellen Anwendungsgebieten, z. B. aus dem juristischen Bereich. Wählt man den zweiten Trainingsvokabularkorpus als gegenüber dem ersten Trainingsvokabularkorpus erheblich kleineren Korpus, kann mit geringem Bearbeitungsaufwand eine Anpassung des linguistischen Sprachmodells an spezielle Anwendungen erfolgen. Auch die zur Modellanpassung verwendeten Parameterwerte werden mittels des zweiten Trainingsvokabularkorpus bestimmt, um den Verarbeitungsaufwand gering zu halten.

Zur Bestimmung der optimierten Parameterwerte ist insbesondere eine Minimierung der Optimierungsfunktion

$$F(\{\lambda_i\}) = \sum_{hw} f(hw) \log \left( \frac{1}{Z_\lambda(h)} \prod_i p_i (w \mid h)^{\lambda_i} \right)$$

mit

$\lambda_i$ als zu optimierenden Parameterwerten,
hw als M-Gramme für ein Vokabularelement w mit einer Vergangenheit h vorausgehender Vokabularelemente,
f(hw) als Quotienten mit der Anzahl in einer Trainingsphase gezählter auftretender M-Gramme des zweiten Teils des zweiten Vokabulars als Dividend und der Anzahl Vokabularelemente des zweiten Vokabulars als Divisor,
$1/Z_\lambda(h)$ als ein Normierungsfaktor und
$p_i$ als geschätzter Auftrittswahrscheinlichkeit des Vokabularelements w gegeben die Vergangenheit h

vorgesehen. Diese eine Wahrscheinlichkeitsfunktion darstellende Optimierungsfunktion mit den Parametern $\lambda_i$ als Variablen ist konvex und hat ein einziges Maximum für einen bestimmten Satz von Parameterwerten $\lambda_i$, der mittels üblicher Näherungsverfahren bestimmbar ist. Eine ausdrückliche Bestimmung von Kullback-Leibler-Distanzen wird auf diese Weise umgangen.

Werden bei der erfindungsgemäßen Bildung eines verbesserten linguistischen Sprachmodells nur M-Gramm-Wahrscheinlichkeiten mit M < 3 verwendet, wird der erforderliche Speicherplatz für Rechner, mit denen die Spracherkennung betrieben werden soll, möglichst gering gehalten. Zur Modellbildung werden in diesemFall Unigramme, Bigramme und insbesondere Lückenbigramme verwendet.

Die Erfindung bezieht sich auch auf ein Spracherkennungssystem mit einem Sprachvokabular mit Vokabularelementen, denen Auftrittswahrscheinlichkeiten zugeordnet sind, die wie oben beschrieben geschätzt sind.

Ein Ausführungsbeispiele der Erfindung werden im folgenden unter Verwendung einer Figur näher erläutert.

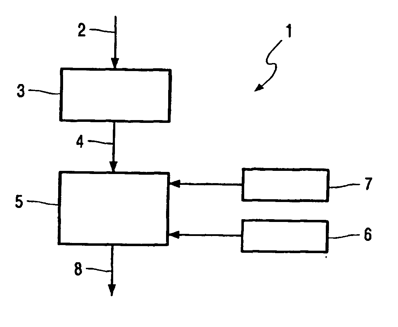

Die Figur zeigt ein Spracherkennungssystem 1, dem an seinem Eingang 2 in elektrischer Form vorliegende Sprachsignale zugeführt werden. Ein Funktionsblock 3 faßt eine akustische Analyse zusammen, die dazu führt, daß am Ausgang 4 sukzessive Merkmalsvektoren ausgegeben werden, die die Sprachsignale beschreiben. Bei der akustischen Analyse werden die in elektrischer Form vorliegenden Sprachsignale abgetastet und quantisiert und anschließend in Rahmen zusammengefaßt. Aufeinanderfolgende Rahmen überlappen sich dabei teilweise gegenseitig. Für jeden einzelnen Rahmen wird ein Merkmalsvektor gebildet. Der Funktionsblock 5 faßt die Suche nach der Folge von Sprachvokabularelementen zusammen, die bei der gegebenen Eingabe der Folge von Merkmalsvektoren am wahrscheinlichsten ist. Wie bei Spracherkennungssystemen üblich, wird hierzu die Wahrscheinlichkeit des Erkennungsergebnisses mit Hilfe der sogenannten Bayes-Formel maximiert. Hierbei geht sowohl ein akustisches Modell der Sprachsignale (Funktionsblock 6) als auch ein linguistisches Sprachmodell (Funktionsblock 7) in die Verarbeitung gemäß Funktionsblock 5 ein. Das akustische Modell gemäß Funktionsblock 6 beinhaltet die übliche Verwendung von sogenannten HMM-Modellen ("Hidden Markov Models") für die Modellierung einzelner Vokabularelemente oder auch einer Kombination mehrerer Vokabularelemente. Das Sprachmodell (Funktionsblock 7) enthält geschätzte Auftrittswahrscheinlichkeiten für die einzelnen Elemente des dem Spracherkennungssystem 1 zugrundeliegenden Sprachvokabulars. Hierauf bezieht sich die im folgenden näher erläuterte Erfindung, die dazu führt, daß die Fehlerrate des am Ausgang 8 ausgegebenen Erkennungsergebnisses reduziert wird. Außerdem wird die Perplexität des Systems reduziert.

Im folgenden wird vorausgesetzt, daß für ein Element w des verwendeten Sprachvokabulars bereits bedingte Auftrittswahrscheinlichkeiten $p_i(w \mid h_i)$ vorliegen, wobei ein Element w ein Wort, ein Teil eines Wortes oder auch eine Aufeinanderfolge von Worten oder Wortteilen sein kann. $h_i$ gibt die Vergangenheit bezüglich des Elements w an, d.h., bestimmte vorausgegangene Vokabularelemente. Abhängig von der jeweiligen Vergangenheit $h_i$ kann $p_i$ eine Unigramm, Bigramm-, Trigramm-, ... Wahrscheinlichkeit sein. Aber auch Lückenbigramme oder Lückentrigramme oder Lücken-M-Gramme höherer Ordnung M können in die Modellbildung eingehen. Bei solchen Modellen weist die Vergangenheit $h_i$ Lücken auf, d.h. es werden nicht unmittelbar aufeinanderfolgende Vokabularelemente der Vergangenheit $h_i$ zugrundegelegt. Das Vorliegen solcher Auftrittswahrscheinlichkeiten $p_i$ kann vorausgesetzt werden. Sie werden in üblicher Weise aus geeigneten Textkorpora bestimmt.

Die Erfindung macht nun von diesen gegebenen M-Gramm-Wahrscheinlichkeiten $p_i$ Gebrauch und liefen nach einer geschickten Kombination derselben eine geschätzte neue Auftrittswahrscheinlichkeit p(w | h), das ist die Wahrscheinlichkeit für das Sprachvokabularelement w gegeben eine Vergangenheit h aus vorangegangenen Vokabularelementen.

Um für diese Auftrittswahrscheinlichkeit p den optimalen Wert zu bestimmen, wird zunächst von der Kullback-Leibler-Distanz

$$D(p\|p_i) = d_i, \qquad i = 1, \dots N$$

ausgegangen.

Die Kullback-Leibler-Distanz ist ein mathematischer Fachbegriff. Ihre Definition läßt sich beispielsweise im Buch von T.M. Cover, J.A. Thomas, "Elements of Information Theory", Wiley-Interscience Publication, Kap. 2.3, nachlesen.

Hiervon ausgehend wird eine Gesamt-Distanz D gemäß

$$D = D(p \| p_0) + \sum_{i=1}^{N} \mu_i (D(p' \| p_i) - d_i)$$

definiert. Hierin ist $p_0$ ein Wahrscheinlichkeitswert unter der Annahme einer Gleichverteilung der entsprechenden Sprachvokabularelemente. p' ist eine Variable für die zu bestimmende Auftrittswahrscheinlichkeit p. Das optimale p' ergibt die zu berechnende Auftrittswahrscheinlichkeit p. Die $\mu_i$ sind so genannte Lagrange-Multiplikatoren, deren Bestimmung innerhalb von Näherungsverfahren ebenfalls definiert und bekannt ist. Hierzu wird auf das oben genannte Buch von T.M. Cover, J.A. Thomas verwiesen werden.

Die Gesamtdistanz D wird nun mittels eines der gängigen Näherungsverfahren für derartige Probleme bestimmt (siehe ebenfalls das genannte Buch von T.M. Cover, J.A. Thomas). Das Problem hat eine geschlossene Lösung. Um die Darstellung der Lösung zu vereinfachen wird ein optimierter Parameterwert $\lambda_i$ unter Verwendung der Lagrange-Multiplikatoren $\mu_i$ gemäß

$$\lambda_i = \frac{\mu_i}{1 + \sum_{i=1}^{N} \mu_i}$$

definiert. Ausgehend von dieser Herleitung ergibt sich für die gesuchte Auftrittswahrscheinlichkeit p die Formel

$$p(w \mid h) = \frac{1}{Z_\lambda(h)} \prod_{i=1}^{N} p_i(w \mid h_i)^{\lambda_i}$$

hierbei ist $Z_\lambda(h)$ ein Normierungsfaktor der sich durch

$$Z_\lambda(h) = \sum_{w} \prod_{i=1}^{N} p_i(w \mid h_i)^{\lambda_i}$$

bestimmt, wobei die Summation über alle Elemente w des für die Bestimmung der optimierten Parameterwerte $\lambda_i$ verwendeten Trainingsvokabularkorpus erfolgt. Zur Schätzung der Auftrittswahrscheinlichkeit p für das Element w des entsprechenden zugrundeliegenden Sprachvokabulars werden somit verschiedene M-Gramm-Wahrscheinlichkeiten $p_i(w \mid h_i)$ miteinander kombiniert. Abhängig von den Vergangenheiten $h_i$ stellen die $p_i$ Unigramm-, Bigramm, Trigramm-, ...Wahrscheinlichkeiten dar. Auch Lückenbigramm-, Lückentrigramm-, ...Wahrscheinlichkeiten kommen als $p_i$ in Betracht. Die Wahrscheinlichkeitswerte $p_i$ werden zunächst mit einem für das entsprechende M-Gramm spezifischen optimierten Parameterwert $\lambda_i$ potenziert. Die so erhaltenen N Potenzwerte werden anschließend miteinander multipliziert, worauf sich noch eine Normierung durch Division durch den Normierungsfaktor $Z_\lambda(h)$ anschließt.

Die optimierten Parameterwerte $\lambda_i$ werden in einer Trainingsphase des Spracherkennungssystems mittels einer Optimierungsfunktion F gemäß

$$F(\{\lambda_i\})=\sum_{hw} f(hw)\log\left(\frac{1}{Z_\lambda(h)}\prod_{i=1}^{N} p_i(w\mid h)^{\lambda_i}\right)$$

mit

$\lambda_i$ als zu optimierenden Parameterwerten,

hw als M-Gramme für ein Vokabularelement w mit einer Vergangenheit h vorausgehender Vokabularelemente,

f(hw) als Quotienten mit der Anzahl in einer Trainingsphase gezählter auftretender M-Gramme des zweiten Teils des zweiten Vokabulars als Dividend und der Anzahl Vokabularelemente des zweiten Vokabulars als Divisor,

$1/Z_\lambda(h)$ als Normierungsfaktor und

$p_i$ als geschätzter Auftrittswahrscheinlichkeit des Vokabularelements w gegeben die Vergangenheit h

bestimmt. Diese Funktion F ist in der betreffenden Trainingsphase des Spracherkennungssystems zu maximieren.

Beim Konstruieren des für das Spracherkennungssystem zu verwendenden linguistischen Sprachmodells werden insbesondere sowohl ein erster Trainingskorpus allgemeiner Art und andererseits auch ein zweiter Trainingsvokabularkorpus anwendungspezifischer Art verwendet. Der erste Trainingskorpus ist beispielsweise der NAB-Korpus, der allgemein erhältlich ist und aus dem Auftrittswahrscheinlichkeiten für die in diesem enthaltenen Sprachvokabularelemente gebildet werden. Der Trainingsvokabularkorpus anwendungsspezifischer Art enthält beispielsweise Sprachvokabularelemente aus Texten aus dem juristischem Bereich oder aus bestimmten technischen Bereichen. Der zusätzliche Aufwand zur Verbesserung der Auftrittswahrscheinlichkeiten von Sprachvokabularelementen gemäß der Erfindung wird vorzugsweise nur für den anwendungsspezifischen Trainingsvokabularkorpus getrieben. Ein erster Teil dieses Trainingskorpus wird dazu zur Bestimmung der Wahrscheinlichkeitswerte $p_i$ verwendet, der andere zweite Teil des anwendungsspezifischen Trainingsvokabularkorpus wird zur Bestimmung der optimierten Parameterwerte $\lambda_i$ verwendet.

Die Funktion F beschreibt die Wahrscheinlichkeitsmasse bezüglich des zweiten Teils des anwendungsspezifischen Trainingsvokabularkorpus, die - wie bereits oben erwähnt - zu maximieren ist. Die Funktion F ist konvex und hat ein einziges eindeutiges Maximum. Für ihre Berechnung stehen mehrere mehrdimensionale Optimierungs- bzw. Näherungsverfahren zur Verfügung, beispielsweise der sogenannte Simplex-Algorithmus, der in W.H. Press et. al., "Numerical Recipes", Cambridge University Press, 1989, Kapitel 10.4, beschrieben ist. Eine erste bevorzugte Anwendung der Erfindung besteht in der Konstruktion von Sprachmodellen, die auf bestimmte Anwendungen angepaßt sind. Beispielsweise wird eine verbesserte Schätzung der Auftrittswahrscheinlichkeit eines Trigramms uvw nach der Formel

$$p(w|uv)=\frac{1}{Z_\lambda}p_{spez}(w)^{\lambda_{spez,1}} p_{allg}(w)^{\lambda_{allg,1}} p_{spez}(w|v)^{\lambda_{spez,\,2}} p_{allg}(w|v)^{\lambda_{al\,lg.2}} p_{allg}(w|uv)^{\lambda_{allg,3}}$$

bestimmt. Die Unigramm-Wahrscheinlichkeit $p_{allg}(w)$, die Bigramm-Wahrscheinlichkeit $p_{allg}(w|v)$ und die Trigramm-Wahrscheinlichkeit $p_{allg}(w|uv)$ werden aufgrund einer Auswertung des oben genannten allgemeinen Trainingsvokabularkorpus ermittelt. Der anwendungsspezifische Trainingsvokabularkorpus wird in zwei Teile eingeteilt. Der erste Teil dient zur Ermittlung der Unigramm-Wahrscheinlichkeit $P_{spez}(w)$ und der Bigramm-Wahrscheinlichkeit $p_{spez}(w|v)$. Der andere zweite Teil des anwendungsspezifischen Trainingsvokabularkorpus wird in der oben beschriebenen Weise zur Ermittlung der optimierten Parameterwerte $\lambda$ verwendet.

Eine zweite bevorzugte Anwendung der Erfindung liegt in der Kombination der Wahrscheinlichkeiten verschiedener M-Gramme eines oder mehrerer Trainingsvokabularkorpora zur verbesserten Schätzung einer Auftrittswahrscheinlichkeit eines Sprachvokabularelements. Ein Beispiel für eine solche Anwendung ist die Bestimmung der Auftrittswahrscheinlichkeit p(w | uv) für ein Trigramm uvw gemäß

$$p(w|uv)=\frac{1}{Z_\lambda} p(w)^{\lambda_{und}} P_{dl}(w|v)^{\lambda_{d1}} p_{d2}(w|u)^{\lambda_{d2}}$$

mit p(w) als Unigramm-Wahrscheinlichkeit für das Sprachvokabularelement w, $p_{d1}$ als Wahrscheinlichkeit des Bigramms vw und $p_{d2}(w|u)$ als Lückenbigramm-Wahrscheinlichkeit für das Lückenbigramm uw. $\lambda_{uni}$, $\lambda_{d1}$ und $\lambda_{d2}$ stellen die entsprechenden optimierten Parameterwerte dar.

Falls nur M-Gramm-Wahrscheinlichkeiten mit M< 3, d.h. nur Bigramme, verwendet werden, kann der erforderliche Speicherplatz beschränkt werden. Als Bigramme werden dann "normale" Bigramme und/oder Lückenbigramme verwendet. Für viele Anwendungen reicht die damit zu erzielende Reduzierung von Fehlerrate und Perplexitätswerten des Spracherkennungssystems aus.

**Patentansprüche**

1. Verfahren zur Schätzung von Auftrittswahrscheinlichkeiten für Elemente eines Sprachvokabulars eines Spracherkennungssystems,
   **dadurch gekennzeichnet,**
   **daß** bei der Schätzung einer Auftrittswahrscheinlichkeit eines Elements des Sprachvokabulars verschiedene M-Gramm-Wahrscheinlichkeiten dieses Elements jeweils mit einem M-Gramm-spezifischen optimierten Parameterwert potenziert und die so erhaltenen Potenzwerte miteinander multipliziert werden,
   wobei die Schätzung der Auftrittswahrscheinlichkeit eines Sprachvokabularelements nicht den Fall erfaßt, daß bei der Schätzung eine mittels eines ersten Trainingsvokabularkorpus geschätzte M-Gramm-Wahrscheinlichkeit mit M > 1 für das Sprachvokabularelement mit einem mit einem optimierten Parameterwert potenzierten Quotienten multipliziert wird,
   wobei der optimierte Parameterwert mittels des GIS-Algorithmus, d.h., des Generalized Iterative Scaling Algorithmus, bestimmt ist und wobei als Dividend des Quotienten eine mittels eines zweiten Trainingsvokabularkorpus geschätzte Unigrammwahrscheinlichkeit des Elements und als Divisor des Quotienten eine mittels des ersten Trainingsvokabularkorpus geschätzte Unigrammwahrscheinlichkeit des Elements dient.

2. Verfahren nach Anspruch 1,
   **dadurch gekennzeichnet,**
   **daß** zur Schätzung eines ersten Teils der M-Gramm-Wahrscheinlichkeiten ein erster Trainingsvokabularkorpus und zur Schätzung eines zweiten Teils der M-Gramm-Wahrscheinlichkeiten ein erster Teil eines zweiten Trainingsvokabularkorpus verwendet wird und
   **daß** zur Bestimmung der den M-Gramm-Wahrscheinlichkeiten zugeordneten optimierten Parameterwerte ein zweiter Teil des zweiten Trainingsvokabularkorpus verwendet wird.

3. Verfahren nach Anspruch 2,
   **dadurch gekennzeichnet,**
   **daß** zur Bestimmung der optimierten Parameterwerte eine Minimierung der Optimierungsfunktion

$$F(\{\lambda_i\}) = \sum_{hw} f(hw) \log \left( \frac{1}{Z_\lambda(h)} \prod_i p_i(w|h)^{\lambda_i} \right)$$

mit
   $\lambda_i$ als zu optimierenden Parameterwerten,
   hw als M-Gramme für ein Vokabularelement w mit einer Vergangenheit h vorausgehender Vokabularelemente,
   f(hw) als Quotienten mit der Anzahl in einer Trainingsphase gezählter auftretender M-Gramme des zweiten Teils des zweiten Vokabulars als Dividend und der Anzahl Vokabularelemente des zweiten Vokabulars als Divisor,
   $1/Z_\lambda(h)$ als ein Normierungsfaktor und
   $p_i$ als geschätzter Auftrittswahrscheinlichkeit des Vokabularelements w gegeben die Vergangenheit h vorgesehen ist.

4. Verfahren nach einem der Ansprüche 1 bis 3,
   **dadurch gekennzeichnet,**
   **daß** nur M-Gramm-Wahrscheinlichkeiten mit M < 3 verwendet werden.

5. Verfahren nach Anspruch 4,
   **dadurch gekennzeichnet,**
   **daß** Lückenbigramm-Wahrscheintichkeiten verwendet werden.

**6.** Spracherkennungssystem mit einem Sprachvokabular mit Vokabularelementen, denen Auftrittswahrscheinlichkeiten zugeordnet sind, wobei das Spracherkennungssystem Mittel enthält, die Zur Durchführung jedes Schrittes eines Verfahrens nach einem der Ansprüche 1 bis 5 angepasst sind, um die Auftrittswahrscheinlichkeiten zu schätzen.

**Claims**

**1.** A method of estimating probabilities of occurrence of speech vocabulary elements in a speech recognition system, **characterized in that**, in the estimation of a probability of occurrence of a speech vocabulary element, several M-gram probabilities of this element are raised to a higher power by means of an M-gram-specific optimized parameter value, and the powers thus obtained are multiplied by each other,
in which the estimation of the probability of occurrence of a speech vocabulary element does not include the case where an M-gram probability with M > I estimated by means of a first training vocabulary corpus for the speech vocabulary element is multiplied by a quotient raised to a higher power by means of an optimized parameter value, which optimized parameter value is determined by means of the GIS algorithm, i.e. the Generalized Iterative Scaling algorithm, and a unigram probability of the element estimated by means of a second training vocabulary corpus serves as a dividend of the quotient, and a unigram probability of the element estimated by means of the first training vocabulary corpus serves as a divisor of the quotient.

**2.** A method as claimed in claim 1, **characterized in that** a first training vocabulary corpus is used for estimating a first part of the M-gram probabilities, and a first part of a second training vocabulary corpus is used for estimating a second part of the M-gram probabilities, and a second part of the second training vocabulary corpus is used for determining the optimized parameter values assigned to the M-gram probabilities.

**3.** A method as claimed in claim 2, **characterized in that**, for determining the optimized parameter values, the optimizing function

$$F(\{\lambda_i\}) = \sum_{hw} f(hw) \log \left( \frac{1}{Z_\lambda(h)} \prod_i p_i (w|h)^{\lambda_i} \right)$$

is minimized, wherein
$\lambda_i$ represents the parameter values to be optimized,
hw represents M-grams for a vocabulary element w with a history h of previous vocabulary elements,
f(hw) represents the quotient with the number of counted M-grams occurring in a training phase of the second part of the second vocabulary as a dividend, and the number of vocabulary elements of the second vocabulary as a divisor,
$1/Z_\lambda(h)$ represents a scaling factor, and
$p_i$ represents the estimated probability of occurrence of the vocabulary element w, given the history h.

**4.** A method as claimed in any one of claims 1 to 3, **characterized in that** only M-gram probabilities with M < 3 are used.

**5.** A method as claimed in claim 4, **characterized in that** gap bigram probabilities are used.

**6.** A speech recognition system using a speech vocabulary with vocabulary elements to which probabilities of occurrence are assigned, the speech recognition system comprising means which are adapted to perform each step of a method as claimed in any one of claims 1 to 5 so as to estimate the probabilities of occurrence.

**Revendications**

**1.** Procédé d'estimation de probabilités d'apparition d'éléments de vocabulaire vocal dans un système de reconnaissance vocale,
**caractérisé en ce**
**que**, dans l'estimation d'une probabilité de l'apparition d'un élément de vocabulaire vocal, plusieurs probabilités de M-gramme de cet élément sont élevées à une puissance supérieure au moyen d'une valeur de paramètre optimisée spécifique M-gramme et les puissances obtenues sont multipliées l'une par l'autre,

auquel cas l'estimation de la probabilité d'apparition d'un élément de vocabulaire vocal n'enregistre pas le cas où, pour l'estimation, une probabilité de M-gramme avec M > 1 estimée au moyen d'un premier corpus de vocabulaire de formation pour l'élément de vocabulaire vocal est multipliée par un quotient élevé à la puissance au moyen d'une valeur de paramètre optimisée,

auquel cas la valeur de paramètre optimisée est déterminée au moyen de l'algorithme GIS (Generalized Iterative Scaling) et une probabilité d'unigramme de l'élément estimée au moyen d'un deuxième corps de vocabulaire de formation sert de dividende du quotient et une probabilité d'unigramme de l'élément estimée au moyen du premier corpus de vocabulaire de formation sert de diviseur du quotient.

2. Procédé selon la revendication 1,
   **caractérisé en ce**
   **qu'**on utilise un premier corpus de vocabulaire de formation pour l'estimation d'une première partie des probabilités de M-grammes et une première partie d'un deuxième corpus de vocabulaire de formation pour l'estimation d'une deuxième partie des probabilités de M-grammes et que, pour la détermination des valeurs de paramètre optimisées affectées aux probabilités de M-grammes, une deuxième partie du deuxième corpus de vocabulaire de formation est utilisée.

3. Procédé selon la revendication 2, **caractérisé en ce que**, pour déterminer les valeurs de paramètres optimisées, la fonction d'optimisation est minimisée

$$F(\{\lambda_i\}) = \sum_{hw} f(hw) \log \left( \frac{1}{Z_\lambda(h)} \prod_i p_i(w|h)^{\lambda_i} \right)$$

dans laquelle
   $\lambda_i$ représente les valeurs de paramètre à optimiser,
   hw représente des M-grammes pour un élément de vocabulaire w avec un historique h des éléments de vocabulaire précédents,
   f(hw) représente le quotient avec le nombre de M-grammes comptés dans une phase de formation de la deuxième partie du deuxième vocabulaire comme dividende et le nombre d'éléments de vocabulaire du deuxième vocabulaire comme diviseur,
   $1/Z_\lambda(h)$ représente un facteur de cadrage, et
   $p_i$ représente la probabilité estimée d'apparition de l'élément de vocabulaire w, compte tenu de l'historique h.

4. Procédé selon l'une des revendications 1 à 3, **caractérisé en ce que** seules des probabilités de M-grammes avec M < 3 sont utilisées.

5. Procédé selon la revendication 4, **caractérisé en ce que** les probabilités de bigrammes à gap sont utilisées.

6. Système de reconnaissance vocale utilisant des éléments de vocabulaire auxquels sont attribuées des probabilités d'apparition qui sont estimées au moyen d'un procédé revendiqué dans l'une des revendications 1 à 5.